# EUROPEAN PATENT APPLICATION

(11) **EP 3 633 325 A1**
(43) Date of publication of application: **08.04.2020**
(21) Application number: 19200704.5
(22) Date of filing: 01.10.2019
(51) Int. Cl.: G01D 21/00, G01D 4/00

(54) **ELECTRONIC DEVICE WITH BACKUP POWER SUPPLY MEANS AND BACKUP POWER SUPPLY METHOD**

(30) Priority: 03.10.2018 FR 1859148
(71) Applicant: DIEHL METERING SAS, 68304 Saint Louis (FR)
(72) Inventor: Devillers, Alexandre, 68270 Wittenheim (FR); Munck, Christophe, 68130 Hausgauen (FR); Bach, Guy, 68640 Waldighoffen (FR)
(74) Representative: Diehl Patentabteilung

(57) **Abstract**

The subject of the present invention is an electronic device (1) mounted in a protective housing and supplied with power during normal operation autonomously by at least one resident power supply element (3) that is housed in said housing, which electronic device comprises at least one printed circuit board (4) bearing at least some of the functional components and being fitted with means (6) for connecting to the power supply lines of said device (1).

Device (1) characterized in that said at least one printed circuit board (4) is provided with at least two external power supply contacts (7, 7') that are not used during the normal operation of said electronic device (1), which contacts are distinct from the connection means (6) mentioned above, and are spatially offset with respect thereto and located so as to be easily accessible when the housing is opened.

## Description

The present invention relates to the field of supplying electrical power to electronic devices, in particular the backup, occasional and/or temporary supply of power to electronic devices operating with an integrated and autonomous power source, and the subject of the invention is such an electronic device fitted with external power supply means.

Electronic devices supplied with power autonomously by cells or batteries are used in numerous technological fields and in highly varied applications.

When the autonomous power supply fails (normal or accidental discharging), it is possible that the last action that was being undertaken cannot be completed or that an intended and/or essential last action cannot be carried out. In particular, this last action may be a critical to the later use of the device in question or of the assembly of which it forms part.

This is particularly the case for electronic devices comprising a memory that stores measurement, control, state or analogous data and information, and means for transmitting said data and information.

Thus, in the event of power supply failure, the last state evaluation or measurement, although having been acquired, cannot be transmitted or displayed due to a lack of sufficient energy.

This is particularly the case for the volumetric index in fluid, in particular water, meters.

The object of the present invention is to provide a straightforward and inexpensive solution to the problem explained above.

To this end, the subject of the invention is an electronic device mounted in a protective housing and supplied with power during normal operation autonomously by at least one battery, cell or analogous resident power supply element that is also housed in said housing, said electronic device comprising at least one printed circuit board bearing at least some of the functional components of said device and being fitted with means for connecting said at least one battery, cell or the like to the power supply lines of said device,

which device is characterized in that said at least one printed circuit board is provided with at least two external power supply contacts that are not used during the normal operation of said electronic device, which contacts are distinct from the connection means mentioned above, and are spatially offset with respect thereto and located so as to be easily accessible when the housing is opened or at least a constituent portion of said housing is removed.

The invention will be better understood by virtue of the description below, which relates to preferred embodiments provided by way of nonlimiting examples and explained with reference to the appended schematic drawings, in which:
Figures 1A and 1B are side and sectional views of an electronic device in the form of a measurement, processing, display and transmission module of a fluid meter, with its protective housing, according to one embodiment of the invention;
Figures 2A and 2B are side and sectional views of a fluid meter comprising the module shown in Figures 1A and 1B;
Figure 3 is a perspective view of the electronic device of Figures 2A and 2B shown in the lower portion of the protective housing, the upper portion of the protective housing having been removed;
Figures 4A and 4B are front and top views of the electronic device shown in Figures 2 and 3;
Figure 5 is a side view of the electronic device shown in Figures 2 to 4;
Figure 6 is a perspective view of the electronic device shown in Figure 3 illustrating its backup (occasional/temporary) power supply via an external battery;
Figures 7A to 7C are, respectively, perspective, side and top views of an electronic device according to one variant embodiment of the invention, said device being supplied with power by an external battery; and
Figures 8 to 10 are partial schematic representations of printed circuit boards forming part of electronic devices according to the invention illustrating other variant embodiments of the additional external power supply contacts.

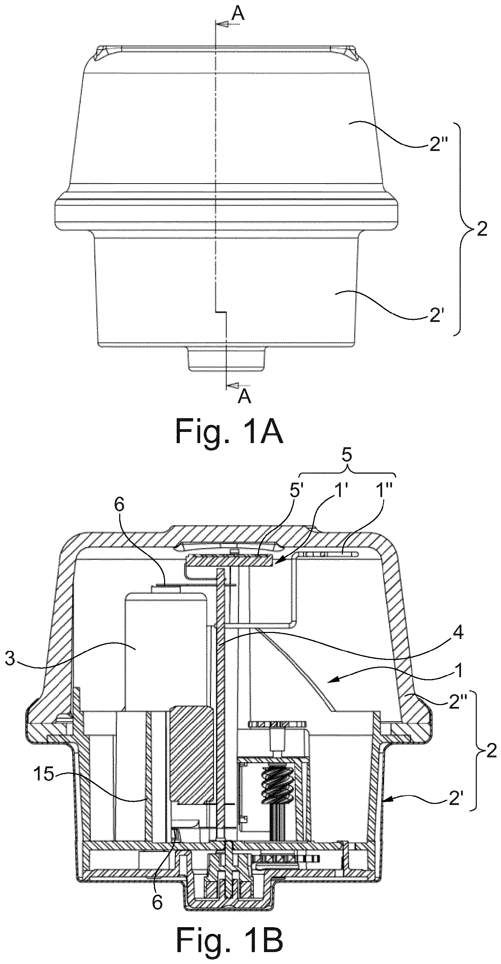

Figures 1, 2, 6 and 7 show in particular an electronic device 1 mounted in a protective housing 2 and supplied with power during normal operation autonomously by at least one battery, cell or analogous resident power supply element 3 that is also housed in said housing 2. This electronic device 1 comprising at least one printed circuit board 4 bearing at least some of the functional components 5 of said device 1 and being fitted with means 6 for connecting said at least one battery, cell or resident power supply element 3 to the power supply lines of said device 1.

The constituent components 5 of the electronic device 1 that are supplied with power by the lines that are connected to the cells 3 may for example comprise, depending on the nature of the device 1 in question: one or more integrated microprocessor and memory circuits, a display means, a wireless transmission circuit, at least one actuator, accessory circuits such as one or more analogue-to-digital converters, amplifiers, filters, logic circuits, registers, sensors, detectors or the like.

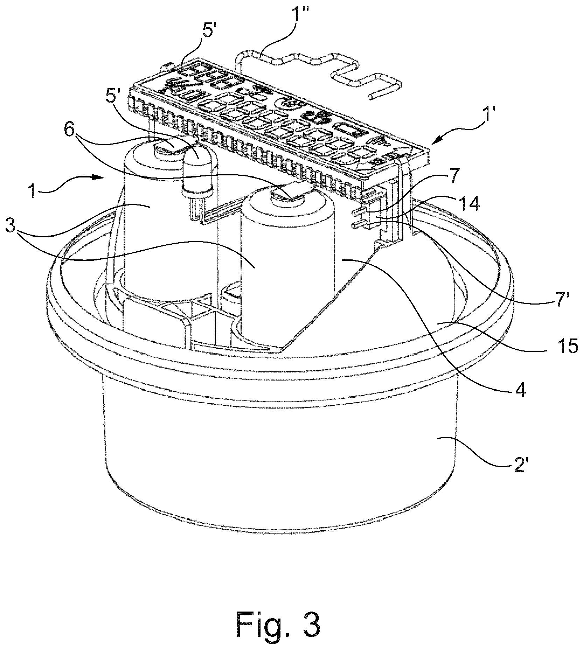

According to the invention and as is more particularly apparent from Figures 3 to 9, said at least one printed circuit board 4 is provided with at least two external power supply contacts 7, 7' that are not used during the normal operation of said electronic device 1, which contacts are distinct from the connection means 6 mentioned above, and are spatially offset with respect thereto and located so as to be easily accessible when the housing 2 is opened or at least a constituent portion 2, 2' of said housing 2 is removed.

Thus, in the event of power supply failure or of the resident autonomous power source being empty, it is possible, very simply and, if applicable, without even requiring additional electrical connection means, to supply the power required for at least partial and at least temporary operation of the electronic device 1. Directly connecting the backup external power source 8 (battery, cell) to the corresponding contacts 7, 7' does away with the need for any other means and also avoids any associated expense.

The amount of backup power delivered must be sufficient at least to perform the desired functions and/or actions, to terminate a cycle or an action in progress and/or to allow data or information stored in a memory 1', or available through the activation of a circuit, to be recovered, displayed and/or transmitted.

Preferably and as also illustrated in Figures 3 to 9, the external power supply contacts 7, 7' are forming at least one functional pair for supplying power and take the form of specific additional contacts that are arranged inside the housing so as to be directly accessible when the housing 2 is open or if a portion 2', 2" thereof has been removed at least, this being without interfering with said at least one battery, cell or resident element 3.

Thus, when not used, said contacts 7, 7' for external power supply are located, and thus hidden and protected, inside the housing 2 and not accessible.

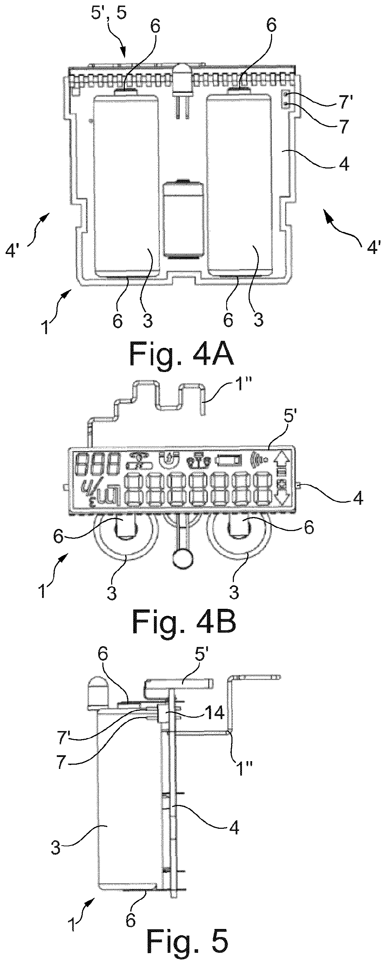

According to one embodiment of the invention, illustrated schematically in Figure 5, that allows the backup power supply to be applied via an approach that is perpendicular to the plane of the board 4, said at least two additional power supply contacts 7, 7' protrude with respect to the surface of the board 4 and are attached to the face thereof bearing at least some of the functional components 5 of the device 1 that are present on said board 4 and/or on which said at least one resident power supply element 3 is arranged.

The height of these contacts 7, 7' is advantageously at most equal to, and preferably lower than, the maximum height of the one or more functional components 5 and/or of said at least one power supply element 3 located in proximity. By being less prominent than the surrounding components, the contacts 7, 7' are less exposed and hence less likely to suffer damage, a short circuit or a malfunction of this type.

According to another embodiment of the invention featured in Figures 3, 4 and 6 to 9, at least two of the external power supply contacts 7, 7' are located in a free zone on one face of the board 4, in particular a zone free of the functional components 5 of the device 1 that are present on said board 4.

Advantageously and according to another possible structural feature of the invention, at least two of the additional external power supply contacts 7, 7' are arranged in proximity to the or one of the lateral edges 4' of the board 4 on which they are mounted, these contacts 7, 7' preferably being located entirely within the outer peripheral border of said board 4, i.e. without extending beyond the proximal lateral edge 4' in question.

Moreover, these contacts 7, 7' are located, as mentioned above, in a zone on the board 4 that is exposed after the housing 2 has been opened.

Preferably, at least two of the additional external power supply contacts 7, 7' consist of contact terminals in the form of lugs, pads, pins, depressions, through bores or portions of metal tongues, tabs or strips, which are preferably spaced apart from one another by a distance corresponding substantially to a standard spacing d1, d2 between the terminals of a cell or battery 8 that is suitable for supplying the electronic device 1, or at least a component 5 forming part thereof, with some or all of its power (see Figures 3 to 6).

To make it easier for the user to connect the terminals of the backup cell or battery 8 temporarily, provision may be made for each contact pad, tab, pin, or portion of a line or tongue 7, 7' to include, at its free end, a local deformation or formation 9 providing a limited preferred contact zone, which may be elastically deformable.

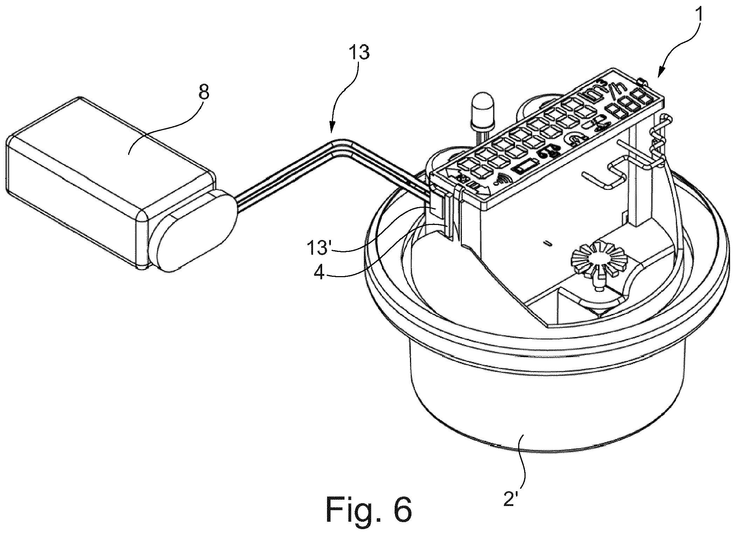

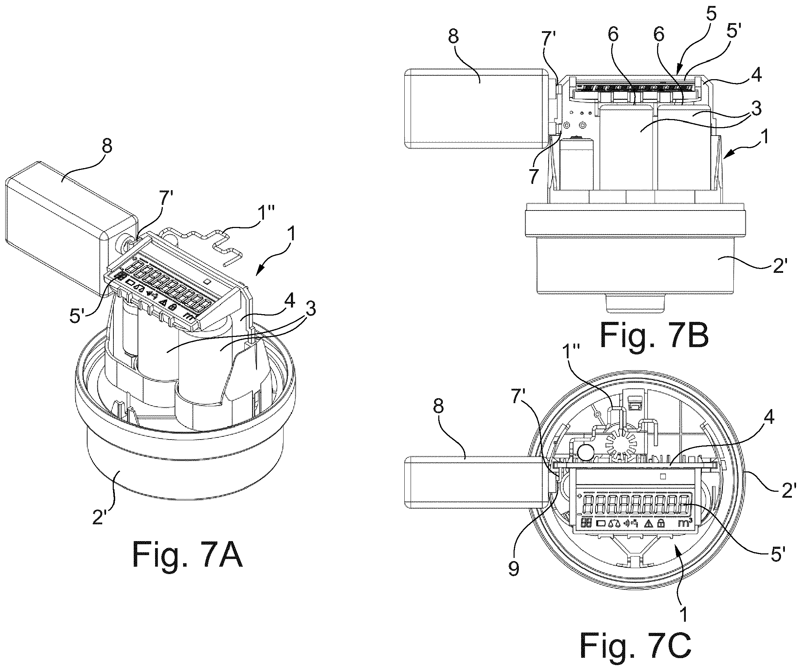

The temporary and/or backup supply of power may take place either through direct contact of the terminals of a backup cell or battery 8 with two contacts 7 and 7' forming a functional pair (Figures 7) or via a connecting cable 13 that is connected to the terminals of the backup cell or battery 8 and has, at its other end, a connector 13' that is suitable for the contacts 7, 7' of a functional pair (Figure 6).

The term "functional pair" is understood to mean a set of two contacts 7, 7', 7" that allow the target component or device to be supplied with power.

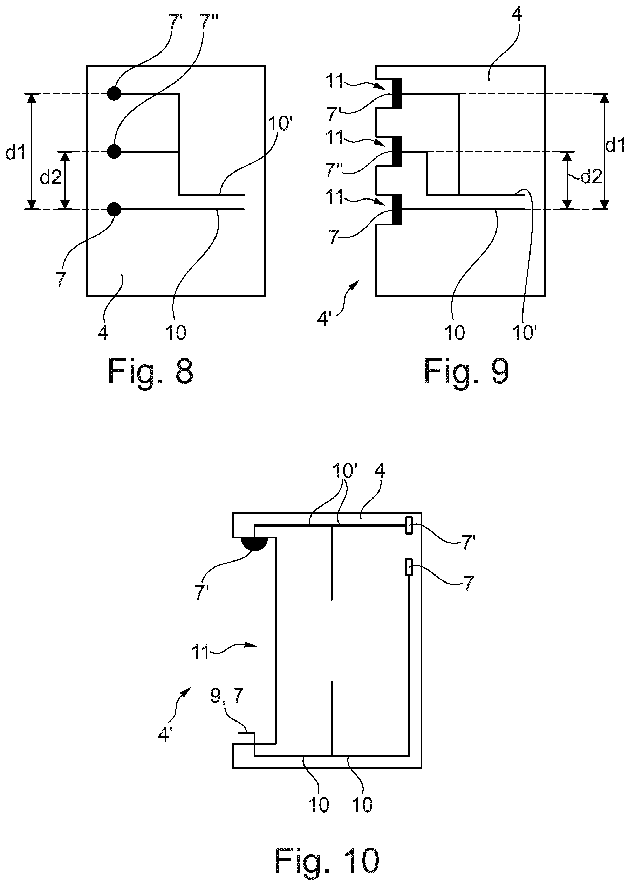

To be able, if necessary, to accept the temporary external power supply through direct contact with cells or batteries 8 corresponding to standard sizes and/or taking different shapes, the board 4 may include at least three external power supply contacts 7, 7', 7" that are capable of forming at least two distinct functional pairs 7, 7'; 7, 7" of contacts, the two contacts of each pair 7, 7'; 7, 7" being spaced apart from one another by a respective determined standard distance d1, d2 and each connected to one of the two external power supply lines 10, 10' that are present on said board 4 (Figures 7 and 8).

According to one embodiment featuring, for example, in Figure 10, the board 4 may include at least two distinct functional pairs of external power supply contacts 7, 7', said pairs being located at different sites on said board 4.

According to a first variant embodiment, the or at least some of the additional external power supply contacts 7, 7', 7" take the form of conductive lands that are formed on the board 4, preferably taking a domed shape (see Figure 7).

According to a second variant embodiment, the or at least some of the additional external power supply contacts 7, 7', 7" take the form of extensions of or branches off the power supply lines that are connected to the connection means 6 of said at least one cell, battery or analogous element 3 forming the normal or usual power supply source.

According to a third variant embodiment, the or at least some of the additional external power supply contacts 7, 7', 7" are formed on or attached to the side of the board 4, preferably at the site of at least one slot 11 cut out of a lateral edge 4' of said board 4 (see Figures 8 and 9).

As shown in Figures 1 to 6, the or each functional pair of additional power supply contacts 7, 7', 7" forms part of a male or female connector 14 formed on the board 4. The backup supply of power then takes place via the connection of a cable 13 fitted with a suitable complementary connector 13' (Figure 6).

According to one practical structural variant illustrated, by way of example, in Figures 1, 2, 3 and 6, the protective housing 2 consists of at least two portions 2', 2" that are joined together reversibly. Moreover, the printed circuit board 4 bearing said at least two additional power supply contacts 7, 7' is mounted such that it is partially slotted into a first 2' of said housing portions 2', 2", the at least two additional power supply contacts 7, 7', 7" being arranged on the portion of said board 4 that is not slotted in, preferably at the site of its free end opposite the first portion of the housing 2', and in a zone of the board 4 that is entirely free and directly accessible after removal of the other or of at least one other portion of said protective housing 2.

The first portion 2' (lower portion) of the housing 2, into which the board 4 is partially slotted and in which it is held laterally by a supporting structure 15, advantageously takes the shape of a cup, and the second portion 2" (upper portion) constitutes a cover closing off said cup, and itself the depth of which defines a cavity into which the unslotted portion of the board 4 extends (Figure 1B).

As shown in the Figures, the board 4 is advantageously arranged in the housing 2 such that it is oriented substantially perpendicularly to a base plane of the housing 2, i.e. generally the plane of the bottom of the lower portion 2', and substantially in parallel to the height or to the longitudinal axis of the housing 2.

The supporting structure 15 ensures that the position of the board 4 is fixed and indexed, and it has for example runners or grooves accepting portions at least of the opposing lateral edges of said board 4.

Advantageously, the cover portion 2" may be transparent and be made of glass.

To streamline the production of the board 4, provision may be made for at least two of the additional power supply contacts 7, 7', 7" to be electrically connected to the same power supply lines 10, 10' as the connection means of the battery, the cell or the analogous resident element 3 supplying said device 1 with power during normal operation.

According to one preferred application of the invention, the electronic device 1 constitutes a measurement, processing, display and transmission module of an energy or fluid meter.

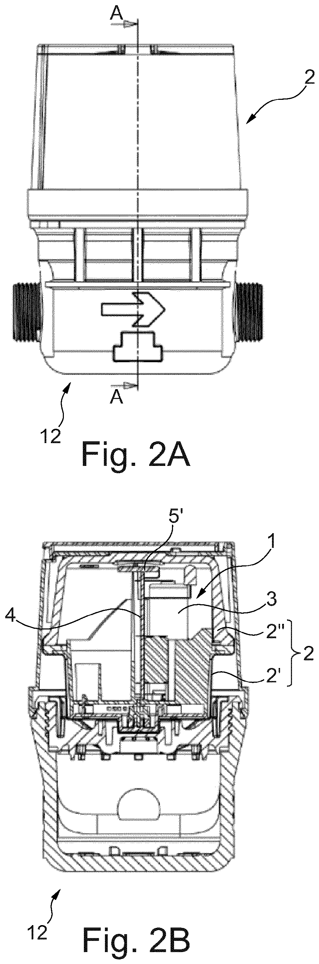

As shown in Figures 1 and 2 of the appended drawings, the invention also relates to an energy or fluid meter, in particular a water meter, characterized in that it comprises a measurement, processing, display and transmission module corresponding to an electronic device 1 such as described above.

Lastly, the invention also relates to a method for occasionally and temporarily supplying an electronic device 1 with power (exceptional backup power supply), which device is mounted in a protective housing 2 formed of at least two portions 2' and 2" that are joined together reversibly, is supplied with power autonomously by at least one integrated cell, battery or analogous element 3, and includes at least one printed circuit board 4 bearing at least some of the functional components 5 of said electronic device 1, in particular at least one storage memory 1' and, optionally, a display circuit 5' and/or a wired or radiofrequency transmission circuit 1". The above occasional and temporary power supply aims to allow, when the integrated autonomous power supply is faulty or empty, the recovery of data stored in said memory 1', such as measurement data, processing results or information on the malfunctioning and/or an at least partial functioning of said device 1, in particular of the display and/or transmission circuit.

This method is characterized in that the electronic device 1 is an electronic device such as described above, i.e. said at least one printed circuit board 4 of which is provided with at least two external power supply contacts 7, 7', 7" that are distinct from the connection means 6 of the integrated battery or cell 3, are spatially offset with respect thereto and are easily accessible when the housing is opened or at least a portion of the housing 2 is removed.

Moreover, said method essentially consists in removing at least a portion 2" of the protective housing 2, in applying a suitable battery, cell or analogous external element 8 to both or to two of the external power supply contacts 7, 7', 7" in question, forming a functional pair for supplying power, and in displaying and/or transmitting the stored data, in particular the last stored data, automatically or after selection by an operator.

Of course, the invention is not limited to the embodiments that are described and shown in the appended drawings. Modifications remain possible, in particular from the point of view of the makeup of the various elements or through substitution of technical equivalents, without departing from the scope of protection of the invention.

## Claims

1. Electronic device (1) mounted in a protective housing (2) and supplied with power during normal operation autonomously by at least one battery, cell or analogous resident power supply element (3) that is also housed in said housing (2), said electronic device (1) comprising at least one printed circuit board (4) bearing at least some of the functional components (5) of said device (1) and being fitted with means (6) for connecting said at least one battery, cell or resident power supply element (3) to the power supply lines of said device (1),
which device (1) is **characterized in that** said at least one printed circuit board (4) is provided with at least two external power supply contacts (7, 7') that are not used during the normal operation of said electronic device (1), which contacts are distinct from the connection means (6) mentioned above, and are spatially offset with respect thereto and located so as to be easily accessible when the housing (2) is opened or at least a constituent portion (2, 2') of said housing (2) is removed.

2. Electronic device according to Claim 1, **characterized in that** said external power supply contacts (7, 7') are forming at least one functional pair for supplying power and take the form of specific additional contacts that are arranged inside the housing (2) so as to be directly accessible when the housing (2) is open or if a portion (2', 2") thereof has been removed at least, this being without interfering with said at least one battery, cell or resident element (3).

3. Electronic device according to Claim 1 or 2, **characterized in that** said at least two additional power supply contacts (7, 7') protrude with respect to the surface of the board (4) and are attached to the face thereof bearing at least some of the functional components (5) of the device (1) that are present on said board (4) and/or on which said at least one resident power supply element (3) is arranged.

4. Electronic device according to Claim 1 or 2, **characterized in that** at least two of the external power supply contacts (7, 7') are located in a free zone on one face of the board (4), in particular a zone free of the functional components (5) of the device (1) that are present on said board (4).

5. Electronic device according to any one of Claims 1 to 4, **characterized in that** at least two of the additional external power supply contacts (7, 7') are arranged in proximity to the or one of the lateral edges (4') of the board (4) on which they are mounted, these contacts (7, 7') preferably being located entirely within the outer peripheral border of said board (4), i.e. without extending beyond the proximal lateral edge (4') in question.

6. Electronic device according to any one of Claims 1 to 5, **characterized in that** at least two of the additional external power supply contacts (7, 7') consist of contact terminals in the form of lugs, pads, pins, depressions, through bores, or portions of metal tongues, tabs or strips, which are preferably spaced apart from one another by a distance corresponding substantially to a standard spacing (d1, d2) between the terminals of a cell or battery (8) that is suitable for supplying the electronic device (1), or at least a component (5) forming part thereof, with some or all of its power.

7. Electronic device according to Claim 6, **characterized in that** each contact pad, pin, tab, or portion of a line or tongue (7, 7') includes, at its free end, a local deformation or formation (9) providing a limited preferred contact zone, which may be elastically deformable.

8. Electronic device according to any one of Claims 1 to 7, **characterized in that** the board (4) includes at least three external power supply contacts (7, 7', 7") that are capable of forming at least two distinct functional pairs (7, 7'; 7, 7") of contacts, the two contacts of each pair (7, 7'; 7, 7") being spaced apart from one another by a determined standard distance (d1, d2) and each connected to one of the two external power supply lines (10, 10') that are present on said board (4).

9. Electronic device according to any one of Claims 1 to 7, **characterized in that** the board (4) includes at least two distinct functional pairs of external power supply contacts (7, 7'), said pairs being located at different sites on said board (4).

10. Electronic device according to any one of Claims 1 to 9, **characterized in that** the or at least some of the additional external power supply contacts (7, 7', 7") take the form of conductive lands that are formed on the board (4), preferably taking a domed shape.

11. Electronic device according to any one of Claims 1 to 9, **characterized in that** the or at least some of the additional external power supply contacts (7, 7', 7") take the form of extensions of or branches off the power supply lines that are connected to the connection means (6) of said at least one cell, battery or resident element (3) forming the normal or usual power supply source.

12. Electronic device according to any one of Claims 1 to 9, **characterized in that** the or at least some of the additional external power supply contacts (7, 7', 7") are formed on or attached to the side of the board (4), preferably at the site of at least one slot (11) cut out of a lateral edge (4') of said board (4).

13. Electronic device according to any one of Claims 6 to 12, **characterized in that** the or each functional pair of additional power supply contacts (7, 7', 7") forms part of a male or female connector (14) formed on the board (4).

14. Electronic device according to any one of Claims 1 to 13, **characterized in that** the protective housing (2) consists of at least two portions (2', 2") that are joined together reversibly and **in that** the printed circuit board (4) bearing said at least two additional power supply contacts (7, 7') is mounted such that it is partially slotted into a first (2') of said housing portions (2', 2"), the at least two additional power supply contacts (7, 7', 7") being arranged on the portion of said board (4) that is not slotted in, preferably at the site of its free end opposite the first portion of the housing (2'), and in a zone of the board (4) that is entirely free and directly accessible after removal of the other or of at least one other portion of said protective housing (2).

15. Electronic device according to any one of Claims 1 to 14, **characterized in that** at least two of the additional power supply contacts (7, 7', 7") are electrically connected to the same power supply lines as the connection means of the battery, the cell or the resident element (3) supplying said device (1) with power during normal operation.

16. Electronic device according to any one of Claims 1 to 15, **characterized in that** it constitutes a measurement, processing, display and transmission module of an energy or fluid meter.

17. Energy or fluid meter (12), in particular a water meter, **characterized in that** it comprises a measurement, processing, display and transmission module corresponding to an electronic device (1) according to any one of Claims 1 to 16.

18. Method for occasionally and temporarily supplying an electronic device (1) with power, which device is mounted in a protective housing (2) formed of at least two portions that are joined together reversibly, is supplied with power autonomously by at least one integrated cell, battery or resident power supply element (3), and includes at least one printed circuit board (4) bearing at least some of the functional components (5) of said electronic device (1), in particular at least one storage memory (1') and, optionally, a display circuit (5') and/or a wired or radiofrequency transmission circuit (1"), said occasional and temporary power supply aiming to allow, when the integrated autonomous power supply is faulty or empty, the recovery of data stored in said memory (1'), such as measurement data, processing results or information on the malfunctioning and/or an at least partial functioning of said device (1), in particular of the display and/or transmission circuit,
which method is **characterized in that** the electronic device (1) is an electronic device according to any one of Claims 1 to 16, i.e. said at least one printed circuit board (4) of which is provided with at least two external power supply contacts (7, 7', 7") that are distinct from the connection means (6) of the integrated battery or cell (3), are spatially offset with respect thereto and are easily accessible when the housing is opened or at least a portion of the housing (2) is removed.
said method essentially consisting in removing at least a portion (2") of the protective housing (2), in applying a suitable battery, cell or analogous external element (8) to both or to two of the external power supply contacts (7, 7', 7") in question, forming a functional pair for supplying power, and in displaying and/or transmitting stored data, in particular the last stored data, automatically or after selection by an operator.
